# EUROPÄISCHE PATENTSCHRIFT

(11) **EP 0 456 851 B1**
(45) Veröffentlichungstag und Bekanntmachung des Hinweises auf die Patenterteilung: **11.08.1993**
(21) Anmeldenummer: 90109078.7
(22) Anmeldetag: 14.05.1990
(51) Int. Cl.: F16L 3/24, F16L 3/18

(54) **Halterung zur Lagerung einer Rohrleitung auf einem Profilträger**
Device for supporting a pipe on a profile support
Fixation pour tuyaux sur un profilé de support

(43) Veröffentlichungstag der Anmeldung: 21.11.1991
(73) Patentinhaber: Bernecker, Klaus-Dieter, D-58256 Ennepetal (DE)
(72) Erfinder: Bernecker, Klaus-Dieter, D-58256 Ennepetal (DE)
(74) Vertreter: Patentanwälte Wenzel & Kalkoff

(56) Entgegenhaltungen:
- DE-A- 3 406 955
- DE-A- 3 820 290
- DE-C- 3 110 716
- DE-C- 3 153 149

## Beschreibung

Die Erfindung betrifft eine Halterung zum Lagern einer Rohrleitung auf einem Profilträger, insbesondere Doppel-T-Träger, in axial bewegbarer oder axial festgelegter Anordnung entweder mittels eines Schlittens oder direkt an einem Flansch des Profilträgers bzw. an der Halterung, wobei die zum Führen des Schlittens bzw. der Rohrleitung bestimmte Halterung zwei Paare von Klemmbacken zum Umgreifen des Flanschrandes für eine Anordnung derselben parallel im Abstand voneinander an dem Flansch des Profilträgers und für jedes Klemmbackenpaar zum paarweisen Festklemmen der Klemmbacken durch eine Schraubverbindung ein in der Gebrauchslage der Halterung quer über den Flansch verlaufendes Spannelement umfaßt. Die Halterung ist auch zum Aufhängen von Rohrleitungen und anderen Bau- und Anschlußteilen an Profilträgern bestimmt.

Bei einer bekannten Halterung der vorstehenden Art (DE-C-31 10 716) weist jede Klemmbacke zum Festklemmen an dem Profilträger eine Klemmnut auf, und die die Klemmbacken paarweise miteinander verbindenden Spannelemente bestehen aus Spannschrauben. Außer der Klemmnut weist jede Klemmbacke eine Führungsnut mit um 90° gegenüber der Klemmnut versetzter Öffnungsrichtung auf. Die Führungsnuten sind paarweise einander zugekehrt. Sie halten einen Flansch eines im Unterteil T-förmigen Rohrschlittens und weisen für die axiale Bewegung der Rohrleitung entsprechende Gleitflächen auf. Insgesamt bilden die einander gegenüberliegenden Führungsnuten der beiden Klemmbackenpaare untere Führungsflächen, auf denen die unteren Ränder des Schlittenflansches gleitbar aufliegen, sowie nach zwei Seiten wirksame seitliche Führungsflächen für die beiden Schmalseiten des Schlittenflansches und schließlich obere Führungsflächen als Abhebesicherung bzw. Niederhalter, die mit den Oberseiten des Schlittenflansches gleitbar in Eingriff kommen können.

Der Aufbau der Klemmbacken ist bei dieser Halterung relativ kompliziert und bedingt einen entsprechenden Herstellungsaufwand, zumal zwei in der Form verschiedene Klemmbackentypen gebraucht werden. Dadurch, daß der Schlittenflansch im Abstand oberhalb der Oberfläche des Profilträgerflansches in den Führungsnuten beider Klemmbacken gehalten ist, ergibt sich ein Höhenversatz, da der Flansch des Rohrschlittens bei anderen herkömmlichen Konstruktionen unmittelbar auf der Oberfläche des Profilträgerflansches aufliegt, gegebenenfalls unter Zwischenschaltung einer dünnen Gleitplatte oder Gleitfolie.

Wenn die Rohrleitung nicht mittels eines Rohrschlittens sondern direkt auf der Oberfläche des Profilträgerflansches gelagert werden soll, müssen zusätzliche Klemmbackentypen verwendet werden, die beispielsweise aus der DE-C-3153149 bekannt sind. Hierbei dient jeweils eine der Klemmbacken, jedes Paares als bloße Befestigungsklemmbacke, während die beiden anderen Klemmbacken zusätzlich an den Außenseiten jeweils mit einem Ansatz versehen sind, der eine Bohrung zur Aufnahme eines Schaftes eines U-förmigen Bügels, der als Rohrhalterung dient, aufweist. Zwischen den beiden Klemmbackenpaaren erstreckt sich eine Gleitplatte, die über Querbohrungen verschiebbar auf den als Spannelementen vorgesehenen Spannschrauben angeordnet ist. Die aufzunehmende, nicht-ummantelte Rohrleitung liegt auf dieser Gleitplatte mittig auf und wird von dem seitlich angebrachten Bügel umfaßt sowie entweder mit diesem zur Bildung eines Festlagers durch entsprechende Spannschrauben auf den Bügelenden festgelegt oder aber mit axialem Spiel belassen. Insofern sind für eine direkte Lagerung des nicht-ummantelten Rohres auf dem Profilträger neue und andersartige Bauelemente erforderlich als im Falle der Lagerung eines Rohrschlittens auf dem Profilträger.

Es besteht daher die Aufgabe, eine Halterung zum Lagern einer Rohrleitung auf einem Profilträger zu schaffen, deren Bauelemente leicht herstellbar sind, insbesondere eine einfache Form aufweisen, die darüber hinaus eine leichte und sichere Montage gestatten und vor allem vielseitig verwendbar sind, beispielsweise auch eine Weiterbildung der Halterung für andere Zwecke wie zum An- bzw. Aufhängen von Rohrleitungen und anderen Bauteilen zulassen.

Die erfindungsgemäße Lösung der vorstehenden Aufgabe ist gekenneichnet durch zwei Führungsstücke mit jeweils einer seitlichen Führungsfläche derart, daß in der Gebrauchlage der Halterung an jedem Spannelement in dessen freiem Bereich zwischen den Klemmbacken eins der beiden Führungsstücke befestigt ist und die Führungsstücke mit einander zugewandten Führungsflächen im Abstand voneinander angeordnet sind.

Die erfindungsgemäße Halterung umfaßt folglich zwei Paare von Klemmbacken, zwei Führungsstücke und zwei Spannelemente.

Grundelement des erfindungsgemäßen Bausatzes einer Halterung zum Lagern einer Rohrleitung entweder direkt oder mittels eines Rohrschlittens ist eine Klemmbacke eines einzigen Typs für sämtliche gewünschten Funktionen der Halterung, ganz gleich, ob eine bloße Seitenführung eines Rohrschlittens auf einem Profilträger oder zusätzlich auch eine Abhebesicherung bzw. Niederhaltung des Rohrschlittens gewünscht wird, oder ob die Rohrleitung direkt auf der Flanschoberfläche des Profilträgers gelagert und mit einem Bügel gesichert werden soll. Ebenso gleichbleibend ist das Spannelement, das jeweils ein Paar von Klemmbacken zusammen an dem Flansch des Profilträgers festklemmt und vorzugsweise eine Gewindespindel, auch als Schraubenbolzen oder Gewindestange zu bezeichnen, ist, die sich durch entsprechende Bohrungen in den Klemmbacken erstreckt und auf die ferner das Führungsstück in einfacher Weise, vorzugsweise in mittiger Lage, aufsteckbar ist und die beiseitig mittels Muttern spannbar ist, wobei die Spannbefestigung mit üblichen Muttersicherungen gegen unbeabsichtigtes Lösen sicherbar ist.

Im einfachsten Fall, nämlich wenn nur eine Seitenführung des Rohrschlittens gebraucht wird, sind die beiden im Abstand einander gegenüberliegend anzuordnenden Führungsstücke jeweils nur mit einer seitlichen Führungsfläche versehen. Hierfür ist das führungsstück vorzugsweise würfel- bzw. plattenförmig ausgebildet und mit einer Bohrung bzw. Gewindebohrung versehen.

Die Unterflächen des Führungsstücks liegen im Gebrauch der Halterung zweckmäßig direkt auf der Oberfläche des Profilträgerflansches auf.

Aus dem vorstehenden ergibt sich, daß die bausatzmäßig herstellbare, erfindungsgemäße Halterung mit einem Minimum an Bauelementtypen auskommt, in dem vorbeschriebenen Fall mit einem Klemmbackentyp, einem Gewindespindeltyp, einem Führungsstücktyp und einem Mutterntyp. Die Typen sind entweder handelsübliche Teile, oder sie sind ohne erheblichen Aufwand, insbesondere in der Serienfertigung leicht herstellbar. Die Montage gestaltet sich sehr einfach. Die Spindeln können mit bereits vormontierten Führungsstücken und Klemmbacken auf den Flansch des Profilträgers aufgesetzt werden, so daß danach nur noch die Muttern anzuziehen sind. Durch den Eingriff der Gewindespindel mit der Bohrungswandung und durch seine Auflage auf der Flanschoberfläche wird das Führungsstück beim Festspannen der Klemmbacken in vorbestimmter Lage mit festem Sitz unverrückbar auf dem Flansch des Profilträgers befestigt.

Der Flansch des Rohrschlittens liegt mit seiner Unterfläche direkt auf dem Profilträger auf, so daß sich kein Höhenversatz durch die Halterung ergibt. Gegebenenfalls kann der Profilträger mit einer dünnen Gleitauflage im Bereich der Lagerung des Rohrschlittens versehen werden. Die seitliche Begrenzung für die Lage des Rohrschlittens bilden die beiden seitlichen Führungsflächen der einander im Abstand gegenüberliegenden Führungsstücke.

Für den Fall, daß außer der Seitenführung auch eine Abhebesicherung bzw. Niederhaltung des Rohrschlittens gebraucht wird, ist erfindungsgemäß vorgesehen, daß das Führungsstück einen seitlichen Ansatz mit einer im Winkel zu der seitlichen Führungsfläche liegenden oberen Führungsfläche aufweist, die im Gebrauch der Halterung eine Abhebesicherung für den Flansch des Rohrschlittens bildet. Neben der Klemmbacke und dem Führungsstück mit nur einer seitlichen Führungsfläche wird in diesem Fall folglich eine dritte Type als Führungsstück mit sowohl seitlicher als auch oberer Führungsfläche vorgesehen, wobei sich ein winkelförmiger Querschnitt des Führungsstücks ergibt. Die Befestigung auch dieses Führungsstückes erfolgt in der gleichen Weise wie bei dem Führungsstück mit nur einer seitlichen Führungsfläche.

Vorzugsweise ist die innere Seitenfläche jeder Klemmbacke im Gebrauch der Halterung gegenüber der Führungsfläche des Führungsstückes zurückgesetzt. Hierdurch wird gewährleistet, daß eine Seitenführung des Rohrschlittens nur durch das Führungsstück und nicht auch durch die Klemmbacken erfolgt. Denn eine Führungsfläche auch an den Seitenflächen der Klemmbacken könnte im Falle eines Verkantens des Rohrschlittens mit der Rohrleitung sich als zu lang erweisen, so daß es zu unerwünschtem Kantendruck an den betroffenen Klemmbacken kommt. Eine auf den mittigen Bereich der Halterung beschränkte Seitenführung, die sich erfindungsgemäß durch eine entsprechende Bemessung der Breite des Führungsstücks gegenüber der Breite der Klemmbacken ergibt, ist beim Stand der Technik, vor allem bei größeren Profilflanschbreiten nur mit hohem Aufwand erreichbar. Hierfür wird nämlich jede Klemmbacke an der Flanschoberseite so weit verlängert, daß sie eine möglichst weit in der Profilträgermitte gelegene Klemmnut für die Seitenführung des Rohrschlittens bildet. Erfindungsgemäß ist lediglich die Entfernung der seitlichen Führungsfläche des Führungsstücks zur Bohrung größer zu wählen als der Abstand der inneren Seitenfläche der Klemmbacke von deren Bohrung.

Aus Herstellungs- und Festigkeitsgründen wird erfindungsgemäß bevorzugt, daß die Klemmbacken und Führungsstücke Schmiede- bzw. Warmpressteile sind. Je nach Beanspruchung ist alternativ jedoch auch vorgesehen, daß die Klemmbacken und Führungsstücke aus entsprechend hochfestem Kunststoff bestehen.

Der erfindungsgemäße Bausatz läßt sich für alle praktischen Bedarfsfälle entsprechend anpassen. Hierfür sind in entsprechender Abstufung Klemmbacken mit verschieden großen Maulöffnungen vorzusehen. Die Gewindespindeln müssen, je nach Flanschbreite, lediglich entsprechend abgelängt werden.

Die Vermaßung spielt erfindungsgemäß keine Rolle, aber die Herstellung einer "Führung", z.B. für den Schlitten einer Rohrleitung, setzt natürlich eine Vermaßung der Bausatzteile voraus, mit der eine entsprechende Lagesicherung des Rohrschlittens auf dem Profilträger erreichbar ist, wobei dem Rohrschlitten nach wie vor die insbesondere für den Fall von Wärmedehnungen notwendige axiale Bewegung gestattet wird. Mit anderen Worten hat der Fachmann hierfür Gleitführungen mit entsprechendem Spiel vorzusehen.

Wenn eine erfindungsgemäße Halterung zur Festlegung bzw. Führung einer nicht-ummantelten Rohrleitung mittels eines U-förmigen Bügels direkt auf dem oberen Flansch eines Profilträgers dienen soll, kann der vorbeschriebene, erfindungsgemäße Bausatz ebenso verwendet werden, allerdings ohne mittig auf dem Spannelement bzw. auf der Gewindespindel anzuordnendem Führungsstück. Stattdessen ist erfindungsgemäß vorgesehen, daß zu dem vorgenannten zweck an zwei an dem gleichen Flanschrand anzuordnenden Klemmbacken ein Winkelstück angesetz ist, auf dessen im Gebrauch der Halterung - zum Flansch des Profilträgers parallelem Schenkel die Rohrleitung aufliegt und an dem der Bügel anschließbar ist und dessen - im Gebrauch der Halterung - zum Flansch senkrechter Schenkel in der Gebrauchslage an den Klemmbacken befestigt ist. Auch wenn dieses Winkelstück so aufteilbar ist, daß es aus zwei Winkelstückteilen, die jeweils an einer Klemmbacke zu befestigen sind, besteht, wobei jedes der beiden Winkelstücke einen der Bügelschäfte aufnimmt und die Rohrleitung selbst unmittelbar auf der Oberfläche des Profilträgerflansches aufliegt, wird ein einteiliges Winkelstück bevorzugt, das praktisch die beiden Klemmbackenpaare an einer Seite überbrückt und verbindet. Diese Verbindung erleichtert die Vormontage der erfindungsgemäßen Halterung zusätzlich dadurch, daß auch bereits der Abstand der beiden einander parallel gegenüberliegenden Klemmbackenpaare durch Vormontieren des Winkelstücks an den beiden hierfür ausgewählten Klemmbacken vorgewählt und festgelegt wird. Falls ein gewisses Spiel gewünscht wird, können statt Bohrungen in dem senkrechten Schenkel des Winkelstücks auch Langlöcher vorgesehen sein.

Auch jeden Fall ergibt sich aus dem erfindungsgemäßen Bausatz wieder eine sehr leicht herstellbare und sehr einfach anzuwendende Möglichkeit für eine andere, nämlich direkte Rohrleitungslagerung, durch ein einfaches Anschrauben eines sehr einfach herstellbaren Bauelementes in Form eines Winkelstücks, ohne daß die übrigen Bauelemente irgendeiner Änderung zu unterwerfen sind.

Vorzugsweise ist der rückseitig ebene, senkrechte Schenkel des Winkelstücks an in der gleichen Vertikalebene liegenden Außenseiten der Klemmbacken anschließbar, so daß sich eine klare räumliche Zuordnung der Bauelemente ergibt.

Auch wenn eine von den Gewindespindeln unabhängige Schraubbefestigung des Winkelstücks an den Klemmbacken möglich ist, wird erfindungsgemäß bevorzugt, daß der senkrechte Schenkel des Winkelstücks zwei Bohrungen für den Durchgang der Spannelemente bzw. der Gewindespindeln der Klemmbacken aufweist. In diesem Fall erhält das Winkelstück einen festen Sitz an den hierfür vorgesehenen Klemmbacken, wenn die Klemmbackenpaare an dem Flansch des Profilträgers festgeklemmt werden. Es bedarf folglich weder zusätzlicher Befestigungselemente noch einer zusätzlichen Befestigungsarbeit.

Aus der vorstehenden Erläuterung ergibt sich, daß die Verwendung der erfindungsgemäßen Halterung durch Festspannen der Klemmbacken an dem Profilträger und mit Umfassen der Rohrleitung mittels eines Bügels, der seinerseits an dem Winkelstück befestigbar ist, nicht etwa nur auf Rohrleitungen oberhalb eines Profilträgers beschränkt ist, sondern daß ebenso eine hängende Lagerung an einem unteren Flansch, z.B. eines Doppel-T-Trägers, möglich ist. Hierzu folgt später noch mehr.

Wenn die Rohrleitung möglichst dicht an bzw. auf der Oberfläche des oberen Flansches eines Profilträgers gelagert werden soll, ist erfindungsgemäß vorgesehen, daß der senkrechte Schenkel des Winkelstücks mittig einen Ausschnitt für den Rohrdurchgang aufweist.

In diesem Fall ist außerdem vorzuziehen, daß die beiderseits des Ausschnitts stehenbleibenden Schenkelteile jeweils mit dem entsprechenden Umriß der Außenseite der betreffenden Klemmbacken fluchten. Auf diese Weise entsteht eine ansprechende, kompakte Bauweise der miteinander verschraubten Teile, nämlich jeweils eines Schenkelteils und einer Klemmbacke, ohne zusätzliche kanten und Vorsprünge.

Im einfachsten Fall werden die Winkelstücke als Abschnitte eines handelsüblichen L-Profils hergestellt. Dadurch ergibt sich eine weitere Senkung der Herstellungskosten.

Für die Bügelbefestigung weist der im Gebrauch der Halterung zum Flansch des Profilträgers parallele Schenkel des Winkelstücks zwei Bohrungen in entsprechendem Abstand für den Durchgang der Bügelschäfte auf. Die Bohrungen werden zum Festspannen der Rohrleitung mittels des Bügels und auch zum Herstellen einer Gleitführung mittels des Bügels benutzt. Es ist vor allem vorgesehen, eine Gleitführung mit entsprechender Befestigung jedes Bügelschaftes in dem erforderlichen Abstand mittels Mutter und Kontermutter herbeizuführen.

Erfindungsgemäß ist ferner vorgesehen, daß auf dem im Gebrauch der Halterung zum Flansch parallelen Schenkel des Winkelstücks als Rohrunterlage ein Gleitstück befestigbar ist, das beispielsweise aus PTFE besteht. Vorzugsweise weist das aus Kunststoff bestehende Gleitstück Plattenform auf und ist zwecks Befestigung auf dem entsprechenden Schenkel des Winkelstücks mit zwei Bohrungen für den Durchgang der Bügelschäfte versehen. Auf diese Weise wird das Gleitstück ohne weitere Befestigungsmittel in einfacher Weise in der vorgesehenen Lage auf dem entsprechenden Schenkel des Winkelstücks befestigt, wenn die Bügelschäfte an dem Schenkel mit Muttern festgeschraubt werden. Das Niveau der Oberfläche des Gleitstücks liegt dabei zweckmäßig geringfügig oberhalb der Oberfläche des Profilträgerflansches, so daß die Gleitführung ausschließlich auf dem Gleitstück erfolgt.

Auf jeden Fall wird durch die erfindungsgemäße Konstruktion erreicht, daß die obere und die untere Gleitführung in der gleichen vertikalen Ebene erfolgt, während dies beim Stand der Technik nicht erreichbar ist, wo eine Gleitplatte in deutlichem Abstand von dem Bügel angeordnet ist.

Nach einer Weiterbildung der Erfindung ist vorgesehen, daß das Führungsstück zur Ausbildung eines Festlagers für den Schlitten der Rohrleitung Bohrungen, insbesondere Gewindebohrungen in dem Ansatz aufweist. Entsprechende Bohrungen befinden sich in dem Flansch des Schlittens. Auf diese Weise wird aus einer Halterung für eine Gleitlagerung des Schlittens ein Festlager, indem der Flansch durch entsprechende Schrauben fest mit den einander gegenüberliegenden Führungsstücken verbunden wird, und zwar unter Benutzung der unveränderten erfindungsgemäßen Klemmbacken und Spannelemente in Form von Gewindespindeln, auf die die Führungsstücke aufgesetzt sind.

Nach einer anderen erfindungsgemäßen Weiterbildung ist vorgesehen, daß an der oberen Führungsfläche des Ansatzes des Führungsstücks eine Gleitauflage oder ein Gleiteinsatz bzw. Gleitzapfen befestigt ist. Diese Ausbildung läßt zu, daß zur Herstellung einer Gleitlagerung die mit einem Ansatz versehenen Führungsstücke der erfindungsgemäßen Halterung umgekehrt äuf den oberen Flansch des Profilträgers aufgelegt werden, so daß die sonst obere Führungsfläche der Führungsstücke nach außen bzw. nach oben weist und die beiden einander gegenüberliegenden L-förmigen Führungsstücke so einen quer zur Hauptachse des Profilträgers verlaufenden Gleitkanal bilden. Hierfür ist wesentlich, daß die sich durch die Führungsstücke erstreckende Bohrung von der Ober- und Unterfläche den gleichen Abstand aufweist. Damit der Schlitten der Rohrleitung auf dem Boden des Gleitkanals möglichst reibungsfrei axial bewegbar ist, sind die vorerwähnten Gleiteinsätze, ein- oder zweiteilig, oder Gleitzapfen oder auch Gleitauflagen möglichst formschlüssig mit dem Ansatz jedes Führungsstücks verbunden. Durch Anschweißen entsprechender Halteplatten an die jetzt obenliegende Unterseite der Führungsstücke kann auch in diesem Falle eine Abhebesicherung geschaffen werden.

Eine weitere sehr wesentliche Weiterbildung der Erfindung besteht darin, daß das mit dem Spannelement, vorzugsweise mit der Gewindespindel, in Eingriff stehende Führungsstück im Bedarfsfall auch - im Gebrauch der Halterung - auf seiner Rückenfläche stehend an der Oberfläche des Flansches des Profilträgers angeordnet ist. Hierfür ist lediglich erforderlich, daß auch die Rückenfläche den gleichen Abstand von der sich durch das Führungsstück erstreckenden Bohrung hat wie die Ober- und Unterfläche des Führungsstücks. Dabei weist jeweils die lange durchgehende Fläche des mit einem Ansatz versehenen Führungsstücks jedes Paars nach innen, wodurch ein verhältnismäßig hoher Führungslkanal entsteht. Gleichzeitig gestattet diese Stellung des mit einem Ansatz versehenen L-förmigen Führungsstücks die Schaffung einer Halterung, die mit den erfindungsgemäßen Klemmbackenpaaren und Spannelementen an dem unteren Flansch des Profilträgers befestigbar ist und als Aufhängevorrichtung mit entsprechenden Anschlußbohrungen dienen kann. Der erfindungsgemäße Bausatz ist somit ohne jede Änderung bis auf die Anschlußbohrung im Ansatz mindestens eines L-förmigen Führungsstücks zur Bildung einer Auf- bzw. Anhängevorrichtung geeignet.

Schließlich ist in einer anderen erfindungsgemäßen Weiterbildung vorgesehen, daß an mit Bohrungen versehenen und im Gebrauch der Halterung auf einem oder zwei Spannelementen angeordneten Platten oder Führungsstücken Stege oder Platten mit Anschlußbohrungen für eine hängende Gebrauchslage befestigt sind. Auch in diesem Falle ist mit den erfindungsgemäßen Klemmbacken und Spannelementen in Form von Gewindespindeln eine Aufhänge- bzw. Anhängevorrichtung leicht herstellbar. Hierzu finden entweder mit den entsprechenden Bohrungen zum Aufschrauben auf die Spannelemente versehene Führungsstücke oder gesonderte Platten Verwendung, wie später noch im Zusammenhang mit der Beschreibung von Ausführungsbeispielen deutlich wird.

Ausführungsbeispiele nach der Erfindung werden nachstehend mit Bezug auf die Zeichnung näher erläutert. In der Zeichnung zeigen:
Figur 1 eine schematische, perspektivische Ansicht einer Klemmbacke als ein Element eines Bausatzes für eine Halterung zum Lagern einer Rohrleitung auf einem Profilträger;
Figur 2 eine schematische, perspektivische Ansicht eines zwei Führungsflächen aufweisenden Führungsstücks als weiteres Element des Bausatzes für die zu Figur 1 bereits genannte Halterung;
Figur 3 eine schematische, perspektivische Ansicht eines mit nur einer Führungsfläche versehenen Führungsstücks als weiteres Element des zu Figur 1 und 2 genannten Bausatzes;
Figur 4 eine schematische Draufsicht auf einen oberen Flansch eines Profilträgers, auf dem quer verlaufend ein Schlitten einer Rohrleitung mittels einer Halterung gelagert und geführt ist, die einem Ausführungsbeispiel der Erfindung entspricht;
Figur 5 eine schematische, perspektivische Ansicht der Lagerung eines Rohrschlittens gemäß Figur 4 mit an dem Schlitten befestigten Rohrschellen;
Figur 6 eine schematische, perspektivische Ansicht eines anderen Ausführungsbeispiels der erfindungsgemäßen Halterung zur direkten Lagerung und Führung einer nichtummantelten Rohrleitung an einem Profilträger mittels einer nach einem Ausführungsbeispiel der Erfindung gestalteten Halterung;
Figur 7 eine schematische Ansicht einer Seitenführung, wobei im linken Teil ein hochkant stehendes L-förmiges Führungsstück und im rechten Teil ein blockförmiges Führungsstück ohne Ansatz dargestellt ist;
Figur 8 eine schematische Darstellung eines Festlagers für einen Rohrschlitten unter Benutzung L-förmiger Führungsstücke in Verbindung mit den anderen Elementen des erfindungsgemäßen Bausatzes;
Figur 9 eine schematische Darstellung einer Seitenführung mit gestrichelt angedeuteter Abhebesicherung für eine Gleitlagerung eines Rohrschlittens mit um 180° gedrehter Lage der Führungsstücke mit einander zugewandten L-Schenkeln;
Figur 10 und 11 schematische perspektivische Ansichten von L-förmigen Führungsstücken mit Gleiteinsätzen bzw. Gleitzapfen im Ansatz jedes Führungsstücks;
Figur 12 eine schematische Seitenansicht eines Profilträgers mit am unteren Flansch befestigten Klemmbacken, teils als Einzelpaar und teils als Doppelpaar;
Figur 13 eine schematische Darstellung einer Aufhängevorrichtung an einem unteren Flansch eines Profilträgers, gebildet aus mindestens einem Klemmbackenpaar, mindestens einem L-förmigen Führungsstück und mindestens einem Spannelement zum Verbinden und Befestigen der vorgenannten Teile an dem Profilträgerflansch;
Figur 14,15,16 und 17 schematische Darstellungen verschiedener Ausführungen von Aufhängevorrichtungen, die mittels erfindungsgemäßer Halterungen am unteren Flansch eines Profilträgers befestigbar sind.

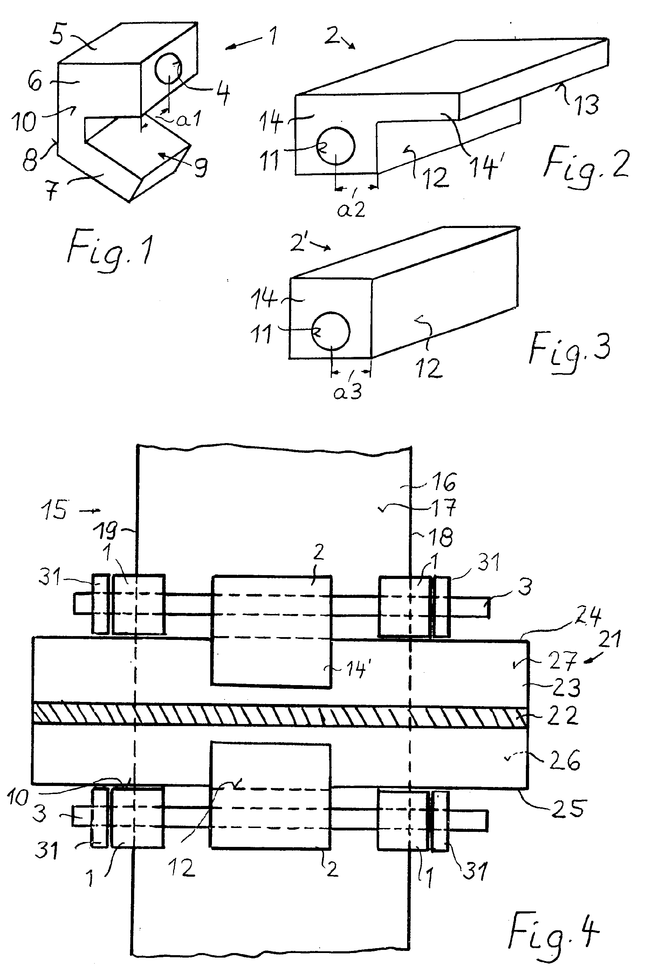

Die wesentlichsten Elemente einer nach einem Ausführungsbeispiel der Erfindung gestalteten Halterung, die bausatzmäßig je nach Bedarfsfall zusammenzustellen ist, sind Klemmbacken 1 gemäß Figur 1 und Führungsstücke 2 bzw. 2' gemäß Figur 2 und bzw. Figur 3.

Jede Klemmbacke 1 besteht aus einem blockförmigen Oberteil 5 mit einer durchgehenden Bohrung 4 sowie aus einem Rückenteil 6, an das sich ein schräges Unterteil 7 derart anschließt, daß etwa in der dargestellten Weise ein Maul 9 zum Umgreifen eines Flanschrandes gebildet wird, wie noch erläutert wird. Die Rückseite oder Außenseite 8 der Klemmbacke 1 ist vorzugsweise glatt und eben gestaltet und liegt im rechten Winkel zur Achse der Bohrung 4.

Das Führungsstück 2 gemäß Figur 2 weist einen blockförmigen Grundkörper 14 mit einer längs durchgehenden Bohrung 11 sowie mit einer seitlichen Führungsfläche 12 und einem die Oberseite des Grundkörpers 14 fortsetzenden seitlichen Ansatz 14' auf, an dessen Unterseite eine zu der seitlichen Führungsfläche 12 senkrecht verlaufende obere Führungsfläche 13 ausgebildet ist.

Das Führungsstück 2' gemäß Figur 3 unterscheidet sich von dem Führungsstück 2 gemäß Figur 2 dadurch, daß der seitliche Ansatz 14' fehlt, so daß sich die seitliche Führungsfläche 12 bei Bedarf über die betreffende Seitenfläche bis nach oben fortsetzt.

Für die gegenseitige Lage der Klemmbacken 1 sowie der Führungsstücke 2 bzw. 2' ist wesentlich, daß der Abstand a1 von der Bohrungsmitte bis zur inneren Seitenfläche 10 der Klemmbacke 1 kleiner ist als der Abstand a2 bzw. a3 zwischen der Mittenachse der Bohrung 11 und der seitlichen Führungsfläche 12 des Führungsstücks 2 bzw. 2'.

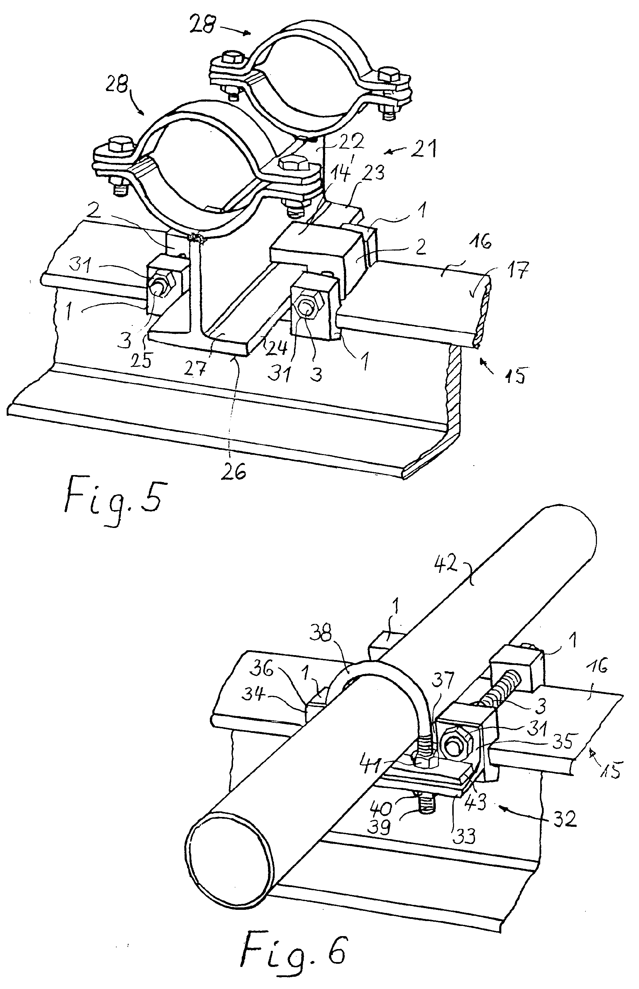

In Figur 4 ist schematisch in einer Draufsicht und in Figur 5 perspektivisch gezeigt, wie aus Klemmbacken 1 und Führungsstücken 2 in Verbindung mit handelsüblichen Elementen eine Lagerung und axiale Führung eines allgemein mit 21 bezeichneten Schlittens auf einem allgemein mit 15 bezeichneten Profilträger (Doppel-T-Träger) gebildet wird.

Auf einem Spannelement 3, bei den vorliegenden Ausführungsbeispielen grundsätzlich als Gewindespindel ausgebildet, ist ein Führungsstück 2 mittig aufgesetzt, und etwa im Bereich der Enden der Gewindespindel ist jeweils eine Klemmbacke 1 eines Paares solcher Klemmbacken 1 angeordnet. Den Abschluß bildet jeweils eine auf jeder Seite auf das Spannelement 3 aufgeschraubte Mutter 31 mit einer nicht dargestellten Muttersicherung. In dieser Weise vormontiert läßt sich das Spannelement 3 auf die Oberfläche 17 des oberen Flanschs 16 des Profilträgers 15 mit der Unterseite des Führungsstücks 2 aufsetzen, wobei eine der beiden Klemmbacken 1, beispielsweise die in der Zeichnung von Figur 4 linksseitige Klemmbacke 1, den entsprechenden Rand 19 des oberen Flanschs 16 mit ihrem Maul 9 bereits lose umfaßt, während die andere Klemmbacke 1 beim Aufsetzen des Spannelements 3 noch im Abstand neben dem rechtsseitigen Rand 18 des oberen Flanschs 16 liegt. Durch Anziehen der beidseitigen Muttern 31 werden beide Klemmbacken 1 schließlich an dem betreffenden Flanschrand 18 bzw. 19, wie in Figur 4 und 5 dargestellt, sicher festgeklemmt. Entsprechend wird nun das zweite Paar Klemmbacken 1 mit einem weiteren Führungsstück 2 auf einem zweiten Spannelement 3 in der gleichen Weise an dem oberen Flansch 16 des Profilträgers 15 in vorbestimmtem Abstand parallel zu dem bereits festgeklemmten Klemmbackenpaar montiert. Der Schlitten 21 wird je nach den Umständen des Bedarfsfalls bereits gemeinsam mit den beiden Klemmbackenpaaren an dem Profilträger 15 angeordnet oder anschließend in die Halterung axial eingeschoben. Für die Montage der in Figur 4 und 5 nicht dargestellten Rohrleitung in den oben am Steg 22 des Schlittens 21 angeschweißten Rohrschellen 28 können die Klemmbacken 1 durch Lockern der Muttern 31 jederzeit versetzt bzw. verschoben oder bezüglich ihrer genauen Lage nachjustiert werden.

Nach Herstellung der Lagerung und Führung liegt der Schlitten 21 mit seiner Unterfläche 26 auf der Oberfläche 17 des oberen Flanschs 16 des Profilträgers 15 auf, gegebenenfalls unter Zwischenschaltung einer Gleitplatte oder Gleitfolie, die im vorliegenden Ausführungsbeispiel nicht dargestellt ist. Damit der Rohrschlitten 21 von dem Profilträger 15 nicht abheben kann, sind die Ansätze 14' mit den oberen Führungsflächen 13 vorgesehen, die bei einer Aufwärtsbewegung des Schlittens 21 gegenüber dem Profilträger 15 mit der Oberfläche des Flanschs 23 des Schlittens 21 in Eingriff kommen. Die seitlichen Begrenzungen bzw. die Seitenführung werden gebildet durch die seitlichen Führungsflächen 12 der einander gegenüberliegenden Führungsstücke 2. Die seitlichen Führungsflächen 12 kommen bei Querbewegungen des Schlittens 21 mit dem entsprechenden oberen bzw. unteren Rand 24 bzw. 25 (bezogen auf Figur 4) in Kontakt. Sämtliche vorgenannten Eingriffsflächen liegen einander in ausreichendem Abstand gegenüber, so daß eine axiale Gleitführung des Schlittens 21 gewährleistet ist.

Wenn eine Rohrleitung 42 unmittelbar auf dem Profilträger 15 gelagert werden soll, nämlich ohne Zwischenschaltung eines Schlittens, wird eine entsprechende Halterung mit einem U-förmigen Bügel 38, wie in Figur 6 dargestellt, gebildet.

Hierfür werden, wie im Fall des Ausbildungsbeispiels gemäß Figur 4 und 5, ebenfalls zwei Spannelemente 3 in Form von Gewindespindeln mit zwei Paaren von Klemmbacken 1 verwendet, diesmal jedoch ohne mittig zwischen den Klemmbacken 1 eines Paares angeordneter Führungsstücke 2.

Wiederum wie aus einem Bausatz werden stattdessen der Bügel 38 und ein Winkelstück 32 benutzt. Dieses besteht aus einem zur Oberfläche 17 des Profilflanschs 15 parallelen Schenkel 33 mit zwei nicht sichtbaren Bohrungen für den Durchgang der Bügelschäfte 39 und einem zu dem Schenkel 33 senkrechten Schenkel 34. Dieser ist durch einen mittigen Ausschnitt 37 in einen mit Bezug auf Figur 6 rechten Schenkelteil 35 und einen linken Schenkelteil 36 unterteilt, zwischen denen sich die Rohrleitung 42 erstrecken kann. Die Schenkelteile 35, 36 weisen jeweils in der Zeichnung nicht sichtbare Bohrungen für den Durchgang der als Spannelemente 3 vorgesehenen Gewindespindeln auf.

Ein weiteres Element aus dem Bausatz für eine erfindungsgemäße Halterung dieser Art ist ein plattenförmiges Gleitstück 43 aus Kunststoff mit zwei, in der Zeichnung nicht sichtbaren Bohrungen für den Durchgang der beiden Bügelschäfte 39.

Für die Vormontage einer solchen Halterung werden die beiden erforderlichen Paare an Klemmbacken 1 gemeinsam mit dem als Brücke zwischen zwei benachbarten Klemmbacken 1 wirkenden Winkelstück 32 auf zwei Spannelementen 3 bzw. Gewindespindeln mit den zugehörigen Muttern 31 und nicht dargestellten Muttersicherungen aufgesetzt. Auch der Bügel 38 kann bereits mit dem Gleitstück 43 und den zugehörigen Muttern 40 und Kontermuttern 41 lose an dem parallelen Schenkel 33 des Winkelstücks 32 vormontiert werden, so daß die gesamte Halterung komplett und in einem Teil auf den oberen Flansch 16 des Profilträgers 15 aufgelegt werden kann. Vor allem liegen auch die Abstände zwischen den beiden Klemmbackenpaaren durch das vormontierte Winkelstück 32 bereits fest. Nach dem Anziehen der Muttern 31 und der Muttern bzw. Kontermuttern 40, 41 ist die Rohrleitung 42 auf dem Gleitstück 43 gelagert und von dem Bügel 38 umfaßt. Je nach dem, ob ein Festlager oder Gleitlager gebildet werden soll, wird der Bügel 38 durch entsprechende Positionierung der Muttern und Kontermuttern 40 und 41 entweder unter Druck erfaßt und gegen das Gleitstück 43 gedrückt oder aber durch den Bügel 38 nur mit Spiel umfaßt. Die Klemmbackenpaare sitzen nach dem Anziehen der Muttern 31 fest und sicher an dem oberen Flansch 16 des Profilträgers 15.

Nachzutragen ist noch, daß das Maul 9 aufgrund des schrägen Unterteils 7 jeder Klemmbacke 1 eine weite Anpassungsmöglichkeit an verschiedene Flanschdicken gestattet. Verschiedene Flanschbreiten werden in einfacher Weise durch entsprechend lang bemessene Spannelemente 3 bzw. Gewindespindeln berücksichtigt.

Durch die verschiedenen Abstände a1 gegenüber a2 bzw. a3 (vgl. Figur 1, 2 und 3) ist gewährleistet, daß die Ränder 24, 25 des Flanschs 23 des Schlittens 21 nur mit den seitlichen Führungsflächen 12 der Führungsstücke 2 in Eingriff kommen können.

Aus den vorhergehenden Beispielen wird deutlich, daß mit den paarweise angeordneten L-förmigen Führungsstücken 2 Gleitlagerungen für Schlitten von Rohrleitungen mit Abhebesicherung oder aber nur entsprechende Seitenführungen mittels eines Paares von blockförmigen Führungsstücken 2' gebildet werden können.

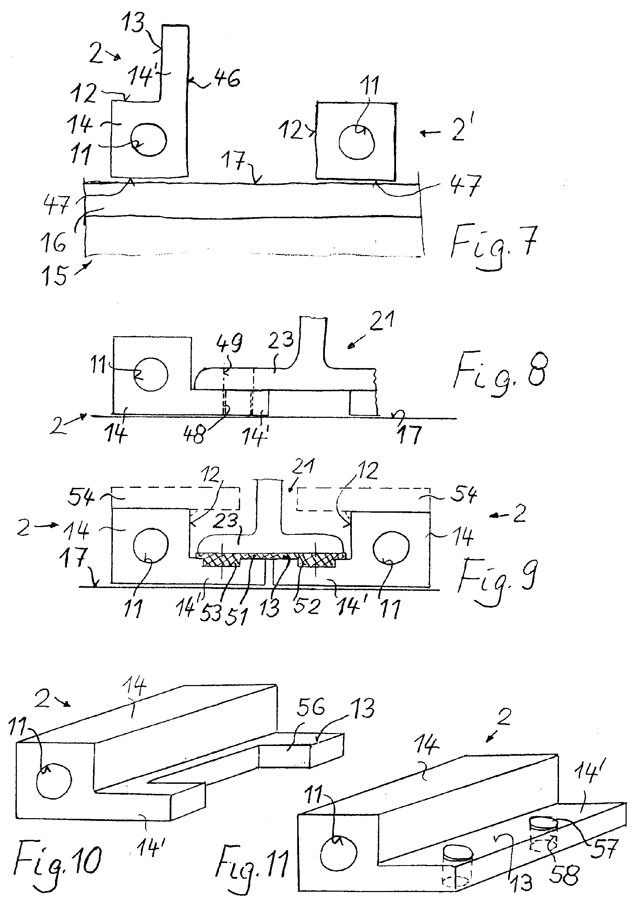

Figur 7 veranschaulicht, allerdings ohne Darstellung der zugehörigen Spannelemente und Klemmbacken, daß L-förmige Führungsstücke 2 auch in Hochkant-Stellung im Abstand voneinander als Seitenführung angeordnet werden können, wobei die sonst obenliegenden Flächen der Führungsstücke 2 nun seitliche Führungsflächen 46 bilden.

Figur 8 verdeutlicht, daß auf der Oberfläche 17 eines sonst nicht dargestellten Profilträgers mittels eines Paares aus Führungsstücken 2, von denen nur ein Führungsstück 2 dargestellt ist, auch ein Festlager für einen Rohrschlitten 21 gebildet werden kann. Hierfür sind mehrere Gewindebohrungen 48 in dem Ansatz 14' jedes L-förmigen Führungsstücks 2 ausgebildet, und entsprechende Bohrungen 49 befinden sich im Flansch 23 des Schlittens 21. Zur Herstellung einer festen Verbindung greifen nicht dargestellte Schrauben durch die Bohrungen 49 hindurch in die Gewindebohrungen 48 der Führungsstücke 2. Die Führungsstücke 2 sind in der gleichen Weise, wie vorstehend bereits mehrfach beschrieben, mittels nicht dargestellter Klemmbackenpaare und Spannelementpaare an dem ebenfalls nicht dargestellten oberen Flansch des Profilträgers befestigt.

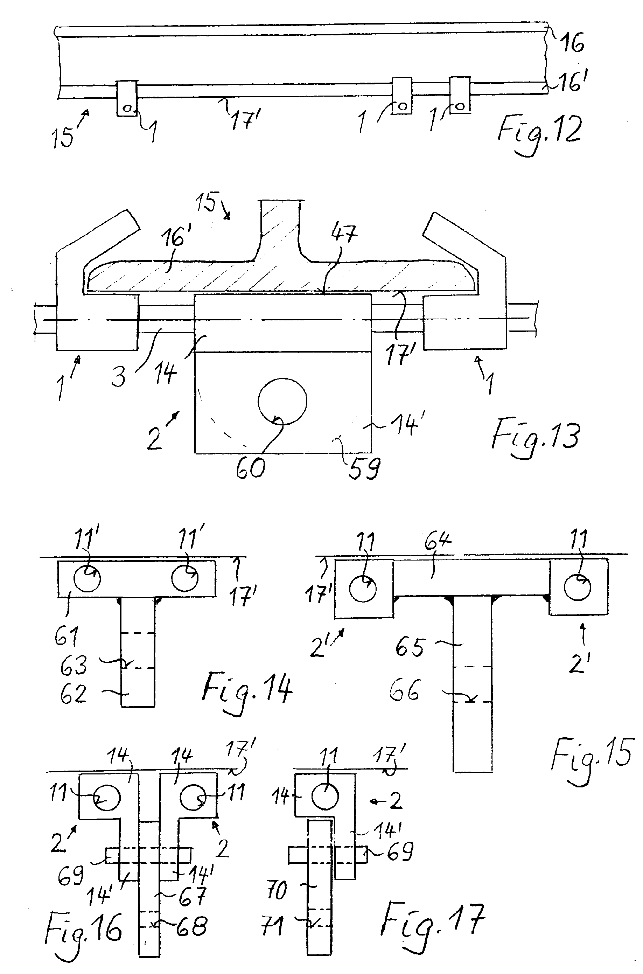

Die gleiche Befestigung gilt für das Beispiel gemäß Figur 9, wo ein Paar Führungsstücke 2 in um 180° gedrehter Stellung miteinander zugewandten langen Schenkeln bzw. Ansätzen 14' eine axiale Gleitlagerung bzw. ein Gleitkanal bilden. Zur Verminderung der Reibung zwischen den Führungsstücken 2 und der Unterfläche des Flansches 23 des Schlittens 21 ist eine ein- oder zweiteilige Gleitauflage 51 aus Kunststoff vorgesehen, die mittels beispielsweise im Querschnitt kreisrunder Vorsprünge 52 in entsprechende Ausnehmungen bzw. Bohrungen 53 in den Ansätzen 14' greift. Statt einer durchgehenden Gleitauflage 51 können auch entsprechend getrennte Gleitauflagen für jeden der beiden Ansätze 14' verwendet werden. Falls neben einer Seitenführung durch die seitlichen Führungsflächen 12 der Führungsstücke 2 auch eine Abhebesicherung für den Schlitten 21 gewünscht ist, können, wie in Figur 9 mit gestrichelten Linien angedeutet ist, entsprechende Halteplatten 54 in der dargestellten Weise auf den nun obenliegenden Unterseiten der Führungsstücke 2 beispielsweise durch Schweißen befestigt werden. Diese Platten sind bei Bedarf auch in den Beispielen gemäß Figur 10 und 11 verwendbar.

Figur 10 und 11 veranschaulichen, daß ein nicht dargestellter Gleiteinsatz, nämlich eine mit mindestens einer PTFE-Scheibe an der Oberfläche versehene Stahlplatte mit seitlichen Vorsprüngen für die vorgenannte Gleitlagerung mit jedem Vorsprung in eine entsprechende Ausnehmung 56 im Ansatz 14' des L-förmigen Führungsstücks 2 eingesetzt werden kann. Statt eines Gleiteinsatzes können auch Gleitzapfen 57 in entsprechende Bohrungen 58, von denen sie oben vorstehen, im Ansatz 14' des Führungsstücks 2 befestigt sein.

In Figur 12 ist schematisch dargestellt, wie Klemmbackenpaare auch an dem unteren Flansch 16' des Profilträgers 15 befestigbar sind, und zwar im linken Teil der Zeichnung ein einzelnes Klemmbackenpaar mit nicht sichtbaren Spannelement und im rechten Teil zwei im Abstand parallel einander gegenüberliegende Paare aus Klemmbacken 1.

Zweck einer solchen Anordnung ist beispielsweise die Schaffung einer Aufhängevorrichtung, wie sie schematisch in Figur 13 dargestellt ist. Das Klemmbackenpaar bzw. die Klemmbackenpaare werden in der gleichen Weise auf den unteren Flansch 16' des Profilträgers 15 aufgeklemmt wie in den vorstehend beschriebenen Ausführungsbeispielen eine entsprechende Befestigung an oberen Flansch 16 vorgenommen wurde. Deshalb kann eine ins einzelne gehende Beschreibung entfallen. Wesentlich ist jedoch, daß das Führungsstück 2, ganz gleich, ob es sich um einen Einzelaufhängung oder aber um eine Doppelaufhängung unter Verwendung von zwei Klemmbackenpaaren und zwei Führungsstücken 2 handelt, in der dargestellten senkrechten Lage mit seiner bisherigen Rückenfläche 47 an der Oberfläche 17' des unteren Flansches 16' anliegt, also etwa so, wie die entsprechende Lage der L-förmigen Führungsstücke 2 auf der Oberfläche 17 des Flansches 16 in Figur 7 dargestellt ist. In dem in der Gebrauchslage nach unten weisenden Ansatz 14' des Führungsstücks 2 befindet sich eine Anschlußbohrung 60 zum direkten Anschließen einer Aufhängegabel mit Gewindestange oder aber zum Befestigen einer Platte 67 mit einer Anschlußbohrung 68 mittels eines Verbindungszapfens 69 (vergl. Fig. 16), auch in der Form einer Einzelaufhängung mit einer Platte 70 mit einer Anschlußbohrung 71 gemäß Figur 17. In Figur 13 ist noch mit einer gestrichelten Linie angedeutet, daß das Führungsstück 2 an der Unterseite des Ansatzes 14' auch als Bogen 59 ausgebildet sein kann.

Statt der Führungsstücke sind auch, wie Figur 14 und 15 zeigen, Platten 61 oder 64 in erfindungsgemäßer Weise an der Oberfläche 17' des nicht dargestellten unteren Flansches des Profilträgers befestigbar, an denen wiederum beispielsweise ein Steg 62 mit einer Anschlußbohrung 63 oder ein Steg 65 mit einer Anschlußbohrung 66 beispielsweise durch Schweißen befestigt sind, und zwar zur Bildung entsprechender Auf- bzw. Anhängevorrichtungen. Hierbei greifen die als Gewindespindeln ausgebildeten nicht dargestellten Spannelemente in entsprechende Bohrungen 11' in der Platte 61 bzw. Bohrungen 11 in blockförmigen Führungsstücken 2', zwischen denen die Platte 64 beispielsweise durch Schweißen befestigt ist. Auch hierbei erfolgt die Befestigung wieder in erfindungsgemäßer Weise, etwa wie in Figur 13 dargestellt.

## Patentansprüche

1. Halterung zum Lagern einer Rohrleitung (42) auf einem Profilträger (15), insbesondere Doppel-T-Träger, in axial bewegbarer oder axial festgelegter Anordnung entweder mittels eines Schlittens (21) oder direkt an einem Flansch (16) des Profilträgers (15) bzw. an der Halterung, wobei die zum Führen des Schlittens (21) bzw. der Rohrleitung (42) bestimmte Halterung zwei Paare von Klemmbacken (1) zum Umgreifen des Flanschrandes für eine Anordnung derselben parallel im Abstand voneinander an dem Flansch (16) des Profilträgers (15) und zum paarweisen Festklemmen der Klemmbacken (1) durch eine Schraubverbindung für jedes Klemmbackenpaar ein in der Gebrauchslage der Halterung quer über den Flansch (16) verlaufendes Spannelement (3) umfaßt, **gekennzeichnet** durch zwei Führungsstücke (2 bzw. 2') mit jeweils einer seitlichen Führungsfläche (12) derart, daß in der Gebrauchslage der Halterung an jedem Spannelement (3) in dessen freiem Bereich zwischen den Klemmbacken (1) eins der beiden Führungsstücke (2 bzw. 2') befestigt ist und die Führungsstücke (2 bzw. 2') mit einander zugewandten Führungsflächen (12) im Abstand voneinander angeordnet sind.

2. Halterung nach Anspruch 1, dadurch **gekennzeichnet,** daß das Spannelement (3) eine sich durch die Klemmbacken (1) erstreckende Gewindespindel ist, auf die das eine Bohrung (11) aufweisende Führungsstück (2 bzw. 2') aufsteckbar ist.

3. Halterung nach Anspruch 1 oder 2, dadurch **gekennzeichnet,** daß das Führungsstück (2 bzw. 2') würfel- bzw. plattenförmig ausgebildet ist.

4. Halterung nach einem oder mehreren der Ansprüche 1 - 3, dadurch **gekennzeichnet,** daß das Führungsstück (2) einen seitlichen Ansatz (14') mit einer oberen Führungsfläche (13) im Winkel zu der seitlichen Führungsfläche (12) aufweist, der im Gebrauch der Halterung eine Abhebesicherung für einen Flansch (23) des Schlittens (21) bildet.

5. Halterung nach einem oder mehreren der Ansprüche 1 - 4, dadurch **gekennzeichnet,** daß die innere Seitenfläche (10 jeder Klemmbacke (1) im Gebrauch der Halterung gegenüber der Führungsfläche (12) des Führungsstücks (2 bzw. 2') zurückgesetzt ist.

6. Halterung nach einem oder mehreren der Ansprüche 1 - 5, dadurch **gekennzeichnet,** daß die Klemmbacken (1) und Führungsstücke (2 bzw. 2') Schmiede- bzw. Warmpreßteile sind oder aus Kunststoff bestehen.

7. Halterung nach einem oder mehreren der Ansprüche 1 - 6, dadurch **gekennzeichnet,** daß zum zweck der Festlegung bzw. Führung einer nicht-unmantelten Rohrleitung (42) mittels eines ansich bekannten U-förmigen Bügels (38) an zwei an dem gleichen Flanschrand (25) möglichst ohne mittiges Führungsstück anzuordnenden Klemmbacken (1) ein Winkelstück (32) an diese angesetzt ist, auf dessen - im Gebrauch der Halterung - zum Flansch (16) des Profilträgers (15) parallelen Schenkel (33) die Rohrleitung (42) aufliegt und an dem der Bügel (38) anschließbar ist und dessen - im Gebrauch der Halterung - zum Flansch (16) senkrechter Schenkel (34) in der Gebrauchslage an den Klemmbacken (1) befestigt ist.

8. Halterung nach Anspruch 7, dadurch **gekennzeichnet,** daß der rückseitig ebene senkrechte Schenkel (34) des Winkelstücks (32) an in gleicher Ebene liegenden ebenen Außenseiten (8) der Klemmbacken (1) anschließbar ist.

9. Halterung nach Anspruch 7 oder 8, dadurch **gekennzeichnet,** daß das Winkelstück (32) ein Abschnitt eines L-Profils ist und der senkrechte Schenkel (34) des Winkelstücks (32) Bohrungen für den Durchgang der Spannelemente (3) bzw. der Gewindespindeln der Klemmbacken (1) und mittig einen Ausschnitt (37) für den Rohrdurchgang aufweist, wobei die beiderseits des Ausschnitts (37) stehenbleibenden Schenkelteile (35, 36) jeweils mit dem entsprechenden Umriß der Außenseite (38) der betreffenden Klemmbacke (1) fluchten.

10. Halterung nach Anspruch 7, 8 oder 9, dadurch **gekennzeichnet,** daß der im Gebrauch der Halterung zum Flansch (16) des Profilträgers (15) parallele Schenkel (33) zwei Bohrungen für den Durchgang der Bügelschäfte (39) aufweist und auf dem parallelen Schenkel (33) als Rohrunterlage ein Gleitstück (43) befestigbar ist, wobei das Gleitstück (43) aus Kunststoff besteht, Plattenform aufweist und zwecks Befestigung auf dem parallelen Schenkel (33) des Winkelstücks (32) mit zwei Bohrungen für den Durchgang der Bügelschäfte (39) versehen ist.

11. Halterung nach einem oder mehreren der Ansprüche 1 - 10, dadurch **gekennzeichnet,** daß das Führungsstück (2) zur Ausbildung eines Festlagers für den Schlitten (21) der Rohrleitung Bohrungen, insbesondere Gewindebohrungen (48) in dem Ansatz (14') aufweist (Fig. 8).

12. Halterung nach einem oder mehreren der Ansprüche 1 - 10, dadurch **gekennzeichnet,** daß an der oberen Führungsfläche (13) des Ansatzes (14') des Führungsstücks (2) eine Gleitauflage (51) oder ein Gleiteinsatz bzw. Gleitzapfen (57) befestigt ist. (Fig. 9, 10 und 11).

13. Halterung nach einem oder mehreren der Ansprüche 1 - 10, dadurch **gekennzeichnet,** daß - im Gebrauch der Halterung - das mit dem Spannelement (3) in Eingriff stehende Führungsstück (2) auf seiner Rückenfläche (47) stehend an der Oberfläche (17 bzw. 17') des Flanches (16) bzw. 16') des Profilträgers (15) angeordnet ist (Fig. 7, 13, 16 und 17).

14. Halterung nach einem oder mehreren der Ansprüche 1 - 10, dadurch **gekennzeichnet,** daß an mit Bohrungen (11 bzw. 11') versehenen und im Gebrauch der Halterung auf einem oder zwei Spannelementen (3) angeordneten Platten (61) oder (64) oder Führungsstücken (2 bzw. 2') Stege (62, 65) (Fig. 14, 15) oder Platten (67, 70) (Fig. 16, 17) für eine hängende Gebrauchslage befestigt sind.

## Claims

1. Holder for mounting a pipeline (42) on a section girder (15), in particular a double-T girder, in an axially movable or axially fixed arrangement either by means of a slide (21) or directly on a flange (16) the section girder (15) or on the holder, the holder intended for guiding the slide (21) or the pipeline (42) comprising two pairs of clamping jaws (1) for gripping around the flange edge for arranging the same parallel at a distance from each other on the flange (16) of the section girder (15) and, for paired clamping of the clamping jaws (1) by a screw connection for each pair of clamping jaws, a clamping element (3) running transversely over the flange (16) in the position for use of the holder, characterised by two guide pieces (2 and 2') respectively having a lateral guide face (12) such that, in the position for use of the holder on each clamping element (3), one of the two guide pieces (2 or 2') is fastened to the free region of the said clamping element between the clamping jaws (1) and the guide pieces (2 and 2') are arranged with mutually facing guide faces (12) at a distance from each other.

2. Holder according to Claim 1, characterised in that the clamping element (3) is a threaded spindle which extends through the clamping jaws (1) and onto which the guide piece (2 or 2') having a bore (11) can be fitted.

3. Holder according to Claim 1 or 2, characterised in that the guide piece (2 or 2') is designed in the form of a cube or plate.

4. Holder according to one or more of Claims 1 - 3 , characterised in that the guide piece (2) has a lateral extension (14'), which has un upper guide face (13) at an angle to the lateral guide face (12) and, during use of the holder, forms a lifting-off preventing means for one flange (23) of the slide (21).

5. Holder according to one or more of Claims 1 - 4, characterised in that the inner side face (10) of each clamping jaw (1) is set back from the guide face (12) of the guide piece (2 or 2') during use of the holder.

6. Holder according to one or more of Claims 1 - 5, characterised in that the clamping jaws (1) and guide pieces (2 and 2') are forged or hot-pressed parts or consist of plastic.

7. Holder according to one or more of Claims 1 - 6, characterised in that, for the purpose of fixing or guiding a non-clad pipeline (42) by means of a U-shaped clip (38) known per se at two clamping jaws (1) to be arranged if at all possible without a central guide piece, on the same flange edge (25), there is set against the said clamping jaws an angle piece (32) on whose leg (33) which - during use of the holder - is parallel to the flange (16) of the section girder (15) the pipeline (42) rests, and on which the clip (38) can be connected, and whose leg (34) which - during use of the holder - is perpendicular to the flange (16) is fastened in the position for use on the clamping jaws (1).

8. Holder according to Claim 7, characterised in that the rearwardly planar perpendicular leg (34) of the angle piece (32) can be connected on planar outer sides (8) of the clamping jaws (1), lying in the same plane.

9. Holder according to Claim 7 or 8, characterised in that the angle piece (32) has a portion of an L section and the perpendicular leg (34) of the angle piece (32) has bores for the passing-through of the clamping elements (3) or of the threaded spindles of the clamping jaws (1) and in the centre a cutout for the passing-through of the pipe, the leg parts (35,36) which remain on both sides of the cutout (37) being flush in each case with the corresponding outline of the outer side (38) of the respective clamping jaw (1).

10. Holder according to Claim 7, 8 or 9, characterised in that the leg (33) which during use of the holder is parallel to the flange (16) of the section girder (15) has two bores for the passing-through of the clip shanks (39), and a sliding piece (43) can be fastened on the parallel leg (33) as a pipe support, the sliding piece (43) consisting of plastic, having the form of a plate and, for the purpose of fastening on the parallel leg (33) of the angle piece (32), being provided with two bores for the passing-through of the clip shanks (39).

11. Holder according to one or more of Claims 1 - 10, characterised in that, to form a fixed bearing for the silde 21, of the pipeline, the guide piece (2) has bores, in particular threaded bores (48), in the extension (14') (Fig. 8).

12. Holder according to one or more of Claims 1 - 10, characterised in that a sliding covering (51) or a sliding insert or sliding pin (57) is fastened on the upper guide face (13) of the extension (14') of the guide piece (2) (Figs. 9, 10 and 11).

13. Holder according to one or more of Claims 1 - 10, characterised in that - during use of the holder - the guide piece (2) in engagement with the clamping element (3) is arranged on its rear face (47) upright on the surface (17 or 17') of the flange (16 or 16') of the section girder (15) (Figs. 7, 13, 16 and 17).

14. Holder according to one or more of Claims 1 - 10, characterised in that on plates (61) or (64) or guide pieces (2 or 2') which are provided with bores (11 or 11') and during use of the holder are arranged on one or two clamping elements (3) there are fastened webs (62, 65) (Figs. 14, 15) or plates (67, 70) (Figs. 16, 17) for 0a suspended position for use.

## Revendications

1. Fixation pour loger un tuyau (42) sur un profilé de support (15), en particulier un support en double T, en disposition mobile axialement ou prédéterminée axialememt, soit à l'aide d'un coulisseau (21), soit directement sur une bride (16) du profilé de support (15) ou sur la fixation, la fixation destinée au guidage du coulisseau (21) ou du tuyau (42) comprenant deux paires de mâchoires de serrage (1) pour saisir le bord de la bride pour une disposition de celles-ci parallèlement en étant écartées l'une de l'autre sur la bride (16) du profilé de support (15) et un élément de serrage (3) qui est transversal sur la bride (16) en position d'utilisation de la fixation pour le serrage par paires des mâchoires de serrage (1) par un assemblage à vis pour chaque paire de mâchoires de serrage, **caractérisée** par deux pièces de guidage (2 ou 2') avec une surface de guidage latérale (12) chacune de telle manière qu'en position d'utilisation de la fixation l'une des deux pièces de guidage (2 ou 2') est fixée sur chaque élément de serrage (3) dans sa zone libre entre les mâchoires de serrage (1) et que les pièces de guidage (2 ou 2') sont placées en étant écartées l'une de l'autre avec des surfaces de guidage (12) tournées l'une vers l'autre.

2. Fixation selon la revendication 1, **caractérisée en ce que** l'élément de serrage (3) est une broche filetée qui s'étend à travers les mâchoires de serrage (1), broche sur laquelle la pièce de guidage (2 ou 2') qui présente une forure (11) peut être emboîtée.

3. Fixation selon la revendication 1 ou 2, **caractérisée en ce que** la pièce de guidage (2 ou 2') est configurée en forme de cube ou de plaque.

4. Fixation selon l'une ou plusieurs des revendications 1 à 3, **caractérisée en ce que** la pièce de guidage (2) présente un épaulement latéral (14') avec une surface de guidage supérieure (13) en angle par rapport à la surface de guidage latérale (12) qui forme, lorsque la fixation est utilisée, un blocage contre le soulèvement pour une bride (23) du coulisseau (21).

5. Fixation selon l'une ou plusieurs des revendications 1 à 4, **caractérisée en ce que** la face latérale intérieure (10) de chaque mâchoire de serrage (1) est placée en arrière par rapport à la surface de guidage (12) de la pièce de guidage (2 ou 2'), lorsque la fixation est utilisée.

6. Fixation selon l'une ou plusieurs des revendications 1 à 5, **caractérisée en ce que** les mâchoires de serrage (1) et les pièces de guidage (2 ou 2') sont des pièces forgées ou estampées à chaud ou sont en matière plastique.

7. Fixation selon l'une ou plusieurs des revendications 1 à 6, **caractérisée en ce que**, dans le but de fixer ou de guider un tuyau non gainé (41) au moyen d'un étrier en forme de U (38) connu en soi sur deux mâchoires de serrage (1) qui doivent être placées sur le même bord de bride (25) dans la mesure du possible sans pièce de guidage centrale, une pièce coudée (32) est rattachée à ces mâchoires, pièce coudée sur le montant (33) qui est parallèle à la bride (16) du profilé de support (15), lorsque la fixation est utilisée, de laquelle le tuyau (42) repose et sur laquelle l'étrier (38) peut être raccordé et dont le montant (34) perpendiculaire à la bride (16), lorsque la fixation est utilisée, est fixé, en position d'utilisation, sur les mâchoires de serrage (1).

8. Fixation selon la revendication 7, **caractérisée en ce que** le montant vertical plat à l'arrière (34) de la pièce coudée (32) peut être raccordé sur les faces extérieures plates (8) des mâchoires de serrage (1) qui sont situées dans le même plan.

9. Fixation selon la revendication 7 ou 8, **caractérisée en ce que** la pièce coudée (32) est une partie d'un profilé en L et le montant vertical (34) de la pièce coudée (32) présente des forures pour le passage des éléments de serrage (3) ou des broches filetées des mâchoires de serrage (1) et, au milieu, une découpure (37) pour le passage du tuyau, les parties du montant (35, 36) qui restent des deux côtés de la découpure (37) étant alignées respectivement sur les contours correspondants de la face extérieure (38) de la mâchoire de serrage (1) concernée.

10. Fixation selon la revendication 7, 8 ou 9, **caractérisée en ce que** le montant (33) qui est parallèle à la bride (16)du profilé de support (15), lorsque la fixation est utilisée, présente deux forures pour le passage des tiges d'étrier (39) et qu'une pièce coulissante (43) peut être fixée sur le montant parallèle (33) en tant que support du tuyau, la pièce coulissante (43) étant en matière plastique, présentant une forme de plaque et étant équipée de deux forures pour le passage des tiges d'étrier (39) pour la fixation sur le montant parallèle (33) de la pièce coudée (32).

11. Fixation selon l'une ou plusieurs des revendications 1 à 10, **caractérisée en ce que** la pièce de guidage (2) présente des forures, en particulier des forures filetées (48), dans l'épaulement (14') pour former un appui fixe pour le coulisseau (21) du tuyau (figure 8).

12. Fixation selon l'une ou plusieurs des revendications 1 à 10, **caractérisée en ce** qu'un appui coulissant (51) ou un insert coulissant ou un tourillon coulissant (57) est fixé à la surface supérieure de guidage (13) de l'épaulement (14') de la pièce de guidage (2) (figures 9, 10 et 11).

13. Fixation selon l'une ou plusieurs des revendications 1 à 10, **caractérisée en ce que**, lorsque la fixation est utilisée, la pièce de guidage (2) qui se trouve en prise avec l'élément de serrage (3) est placée debout sur sa face arrière (47) à la surface (17 ou 17') de la bride (16 ou 16') du profilé de support (15) (figures 7, 13, 16 et 17).

14. Fixation selon l'une ou plusieurs des revendications 1 à 10, **caractérisée en ce que** des baguettes (62, 65) (figures 14, 15) ou des plaques (67, 70) (figures 16, 17) sont fixées pour une position d'utilisation suspendue sur des plaques (61) ou (64) ou des pièces de guidage (2 ou 2') pourvues de forures (11 ou 11') et placées, lorsque la fixation est utilisée, sur un ou deux éléments de serrage (3).
